(19) **Europäisches Patentamt**

**European Patent Office**

**Office européen des brevets**

(11) **EP 1 504 961 B1**

(12) **EUROPÄISCHE PATENTSCHRIFT**

| | |
|---|---|
| (45) Veröffentlichungstag und Bekanntmachung des Hinweises auf die Patenterteilung:<br>**18.10.2006 Patentblatt 2006/42** | (51) Int Cl.:<br>**B60R 1/08** (2006.01) |

(21) Anmeldenummer: **04016514.4**

(22) Anmeldetag: **14.07.2004**

(54) **Steuereinrichtung und Verfahren zum Ansteuern eines abblendbaren Spiegels**

Control device and process for controlling a anti-glare mirror

Dispositif et procédé pour le contrôle du miroir anti-éblouissement

| | |
|---|---|
| (84) Benannte Vertragsstaaten:<br>**AT BE BG CH CY CZ DE DK EE ES FI FR GB GR HU IE IT LI LU MC NL PL PT RO SE SI SK TR** | (72) Erfinder: **Semineth, Marco**<br>**97631 Bad Königshofen (DE)** |
| (30) Priorität: **08.08.2003 DE 10337477**<br>**08.08.2003 DE 10337478** | (74) Vertreter: **Tergau & Pohl Patentanwälte**<br>**Mögeldorfer Hauptstrasse 51**<br>**90482 Nürnberg (DE)** |
| (43) Veröffentlichungstag der Anmeldung:<br>**09.02.2005 Patentblatt 2005/06** | (56) Entgegenhaltungen:<br>**EP-A- 0 622 660**   **US-A- 5 193 029**<br>**US-A1- 2003 053 216** |
| (73) Patentinhaber: **Brose Fahrzeugteile GmbH & Co. KG, Coburg**<br>**96450 Coburg (DE)** | |

**Beschreibung**

Die Erfindung bezieht sich auf eine Steuereinrichtung und ein Verfahren zur Steuerung eines Abblendgrades eines Kraftfahrzeugspiegels.

Bekannt sind im Bereich der Kraftfahrzeugtechnik elektrochromatische Außenspiegel. Diese Außenspiegel lassen sich abblenden, indem eine äußere Spannung an den Spiegel angelegt wird.

Aus der US 2003/053216 A1 ist ein Elektrochrom-Rückspiegel-System eines Kraftfahrzeugs bekannt. Ein Mikrocontroller legt an eine elektrochrome Zelle des Systems temporär eine Spannung an, die den Spannungslevel zur gewünschten Färbung überschreitet, um die Geschwindigkeit der Farbänderung zu erhöhen. Aus der EP 0 622 660 A1 ist ebenfalls ein elektrochromer Spiegel bekannt. Aus der US 5,193,029 ist ebenfalls eine automatische Rückspiegel-System bekannt. Ein Reflektionselement kann zwischen zumindest zwei verschiedenen Reflexionsbedingungen gesteuert werden.

Der Erfindung liegt die Aufgabe zugrunde, eine Steuereinrichtung eines Spiegels und ein Verfahren zum Ansteuern eines elektrisch abblendbaren Spiegels anzugeben, bei dem die Sicht des Fahrzeugführers durch den Spiegel möglichst verbessert wird.

Diese Aufgabe wird erfindungsgemäß durch ein Verfahren und eine Steuereinrichtung mit Merkmalen der unabhängigen Ansprüche gelöst. Vorteilhafte Ausgestaltungen des erfindungsgemäßen Verfahrens und der erfindungsgemäßen Steuereinrichtung sind in Unteransprüchen angegeben.

Vorteilhafterweise ist es vorgesehen, dass zum Umschalten des Abblendgrades an den Spiegel eine Ladespannung angelegt wird, die die für den gewünschten Abblendgrad erforderliche Soll-Spannung betragsmäßig überschreitet, und zwar insbesondere solange, bis der gewünschte Abblendgrad erreicht ist, und dass nach Erreichen des gewünschten Abblendgrades die Soll-Spannung an den Spiegel angelegt wird. Unter dem gewünschten Abblendgrad wird hierbei insbesondere ein Bereich verstanden, in dem der Fahrzeugführer durch einen Blick in den Spiegel das Sichtfeld ohne behindernde Blendung durch andere Lichtquellen beobachten kann.

Unter der Ladespannung wird dabei eine bereitgestellte Spannung verstanden, die entsprechend anlegbar ist. Die Ladespannung kann dabei insbesondere durch eine entsprechend geladene Kapazität, durch eine mittels eines Stromflusses durch eine Induktivität generierte induzierte Spannung, durch ein Batteriespannungspotential bereitgestellt werden. Dabei können derartige Spannungsquellen durch ein Steuerelement, beispielsweise einen Transistor für die Ladespannung in der Höhe der angelegten Spannung reduziert sein. Abweichend von einer vorteilhaften Ausgestaltung der Erfindung, in der die Ladespannung konstant ist, kann in einer alternativen Ausgestaltung vorgesehen sein, dass die Ladespannung in einem Spannungsbereich schwankt oder innerhalb dieses Spannungsbereichs abfällt, wobei der Spannungsbereich betragsmäßig die erforderliche Soll-Spannung überschreitet.

Vorteilhafterweise wird der Spiegel in einer Weiterbildung der Erfindung "umgeladen", indem während des Umschaltens des Abblendgrades die für den Spiegel jeweils maximal zulässige Ladespannung angelegt wird. Die Maximale Ladespannung ist dabei von den elektrischen Eigenschaften des Spiegels abhängig und kann zudem über den aktuellen Ladezustand variieren.

Während des Aufladens des Spiegels ist die maximal zulässige Ladespannung die maximal zulässige Spiegelspannung (Maximalspannung am Spiegels); die Maximalspannung bei einem elektrochromatischen Spiegel beträgt vorzugsweise 1,4 Volt oder weniger.

Während des Entladens des Spiegels ist die maximal zulässige Ladespannung diejenige Spannung, die betragsmäßig der Differenzspannung zwischen der zulässigen Maximalspannung des Spiegels und der Ist-Spannung des Spiegels (=Spannung an der inneren Kapazität des Spiegels) entspricht und eine der Ist-Spannung entgegengesetzte Spannungsrichtung- bzw. -polarität aufweist. Es wird daher als vorteilhaft angesehen, wenn beim Entladen die Ladespannung umgepolt wird und an den Spiegel eine Spannung mit dem genannten Spannungsbetrag angelegt wird. Bevorzugt wird zum Umpolen der Ladespannung eine Vollbrückenschaltung verwendet.

Vorzugsweise wird die umgepolte Ladespannung mit der Ist-Spannung am Spiegel während des gesamten Entladevorgangs mitgeführt, um zu gewährleisten, dass stets eine Ladespannung am Spiegel anliegt, mit der ein optimal schnelles Entladen erzielt wird.

Erfindungsgemäß ist es vorgesehen, dass der Ladezustand des Spiegels - zumindest beim Aufladen oder Entladen des Spiegels - überwacht wird, indem der Spiegel von der Ladespannung elektrisch abgetrennt wird und die am Spiegel vorliegende Ist-Spannung hochohmig gemessen wird. Als Messeingang wird beispielsweise eine MOSFET-Transistor-Eingang verwendet, der beispielsweise in einer Differenzstufe integriert sein kann.

Ein abblendbarer Spiegel verhält sich elektrisch näherungsweise wie eine Reihenschaltung aus einer verlustbehafteten Kapazität und einem Widerstand. Wird nun die tatsächliche Ist-Spannung an der Kapazität während des Lade- oder Entladevorgangs gemessen, so weist diese von der Ladespannung der Kapazität ab. Dieser Messfehler beruht auf dem Spannungsabfall, der von dem inneren Widerstand des Spiegels hervorgerufen wird. Während des Aufladens und Entladens der Spiegelkapazität fließt ein Lade- bzw. Entladestrom durch die innere Kapazität und den inneren Widerstand, so dass es zu dem erwähnten signifikanten Spannungsabfall an dem insbesondere nichtlinearen Widerstand kommt. Beispielsweise beim Aufladen des Spiegels von einer Ist-Spannung von Null Volt fällt anfangs die gesamte Ladespannung an dem Reihenwiderstand ab. An dieser Stelle setzt die Erfindung an, indem vorgesehen wird, während des Messens des Ladezustands der inneren Kapazität den Spiegel hochohmig zu schalten, so dass kein wesentlicher Entladestrom auftritt und der Innenwiderstand des Spiegels gegenüber dem hochohmigen Eingangswiderstand des Messkreises der Steuereinrichtung vernachlässigt werden kann.

Um zu gewährleisten, dass der Auf- oder Entladevorgang beendet wird, sobald die Zielspannung am Spiegel bzw. der Zielladezustand erreicht ist, wird der elektrische Ladezustand der Spiegels vorzugsweise zyklisch oder kontinuierlich überwacht. Sobald die Ist-Spannung des Spiegels der Soll-Spannung entspricht oder innerhalb eines für die Soll-Spannung vorgegebenen Toleranzbandes liegt, wird von der Maximalspannung auf die Soll-Spannung umgeschaltet.

Zusätzlich oder alternativ kann der Ladezustand des Spiegels überwacht werden, indem der durch den Spiegel während des Aufladens oder Entladens fließende Lade- bzw. Entladestrom erfasst und ausgewertet wird. Vorzugsweise wird der durch den Spiegel fließende Lade- bzw. Entladestrom integriert, und das resultierende Integrationsergebnis wird zur Bestimmung des Ladezustands des Spiegels herangezogen.

Um den optimalen Abblendgrad des Spiegels bestimmen zu können, wird es als vorteilhaft angesehen, wenn zumindest das auf den Spiegel fallende Licht gemessen wird und der Abblendgrad in Abhängigkeit von der einfallenden Lichtleistung vorgegeben wird. Darüber hinaus kann vorzugsweise auch die Intensität des Umgebungslichts gemessen und der Abblendgrad in Abhängigkeit von der Differenz aus der auf den Spiegel fallenden Lichtintensität und der Intensität des Umgebungslichts eingestellt werden. Zum Messen der beiden Lichtintensitäten werden beispielsweise zwei Sensoren verwendet (2-Sensor-Prinzip).

Ein weiterer Aspekt der Erfindung ist, dass die Steuereinrichtung ausgestaltet ist zur Einstellung des Abblendgrades an den Spiegel (4) einen Ladestrom anzulegen, so dass eine am Spiegel anliegende Spannung die für den gewünschten Abblendgrad erforderliche Soll-Spannung (Usoll) betragsmäßig überschreitet. Hierzu ist für eine Vorgabe des zeitlichen Verlaufs des Ladekurve diese von Werten des Ersatzschaltbildes der charakteristischen elektrischen Eigenschaften des EC-Spiegels abhängig. Eine Regelung des Ladestromes kann dabei durch eine entsprechende Hardware-Beschaltung, besonders bevorzugt durch eine programmgesteuerte Regelung erfolgen. Hierzu wird in einer Ausgestaltung der Erfindung der Ladestrom mittels eines ersten Differenzgliedes an einem Messwiderstand gemessen und der Ausgangsspannungswert des ersten Differenzgliedes mittels eines zweiten Differenzgliedes von einem zum gewünschten Ladestrom korrelierenden Vorgabespannungswert eines Mikrocontrollers subtrahiert, wobei das Ausgangssignal des zweiten Differenzgliedes mittels eines Transistors den Ladestrom treibt.

Die Erfindung bezieht sich außerdem auf eine Steuereinrichtung zum Ansteuern eines elektrisch abblendbaren Spiegels, wobei die Steuereinrichtung einen vorgegebenen Abblendgrad des Spiegels einstellt, indem sie den Spiegel auf eine vorgegebene Soll-Spannung auflädt bzw. entlädt. Gemäß einer Ausgestaltung der Erfindung weist die Steuereinrichtung eine Vollbrückenschaltung auf, mit der die Ladespannung am Spiegel, insbesondere zum Entladen des Spiegels, in einfacher Weise umgepolt werden kann. Diese Steuerungseinrichtung weist dabei vorzugsweise einen Mikrocontroller auf, der eingerichtet ist die Kapazität des Spiegels gemäß des zuvor dargelegten Verfahrens auf eine Sollspannung zu laden oder zu entladen.

Zur Erläuterung der Erfindung zeigen

Figur 1    ein Ausführungsbeispiel für eine erfindungsgemäße Steuereinrichtung, mit der sich auch das erfindungsgemäße Verfahren ausführen lässt,

Figur 2    ein elektrisches Ersatzschaltbild eines abblendbaren Kraftfahrzeugspiegels beim Aufladen,

Figur 3    ein elektrisches Ersatzschaltbild eines abblendbaren Kraftfahrzeugspiegels beim Entladen,

Figur 4    ein Flussdiagramm, das beispielhaft die Arbeitsweise der Steuereinrichtung gemäß der Figur 1 im Detail darstellt und

Figur 5    ein Ausführungsbeispiel für eine Vbat-Kurzschluss-Schutzeinrichtung für die Steuereinrichtung gemäß der Figur 1.

Elektrisch verhalten sich elektrochromatische Außenspiegel näherungsweise wie eine Reihenschaltung aus einer verlustbehafteten Kapazität und einem Widerstand. Durch Anlegen einer äußeren Spannung - nachfolgend Ladespannung genannt - an den Spiegel lässt sich die Kapazität des Spiegels auf- oder entladen; der Ladezustand der Kapazität - also die tatsächliche "Ist-Spannung" am Spiegel - bestimmt den Abblend- bzw. Abdunklungsgrad des Spiegels. Beispielsweise wird der Spiegel umso mehr abgeblendet, je größer die in der Kapazität des Spiegels gespeicherte elektrische Ladung ist. Durch "Umladen" der Kapazität des Spiegels kann somit der Abblendgrad des Spiegels verändert werden. Eine Möglichkeit ist, die Spiegel zum Abblenden auf eine Soll-Spannung von 0,7 Volt aufzuladen. Soll das Abblenden beendet werden, so wird der Spiegel entladen, und zwar auf eine Spannung von Null Volt.

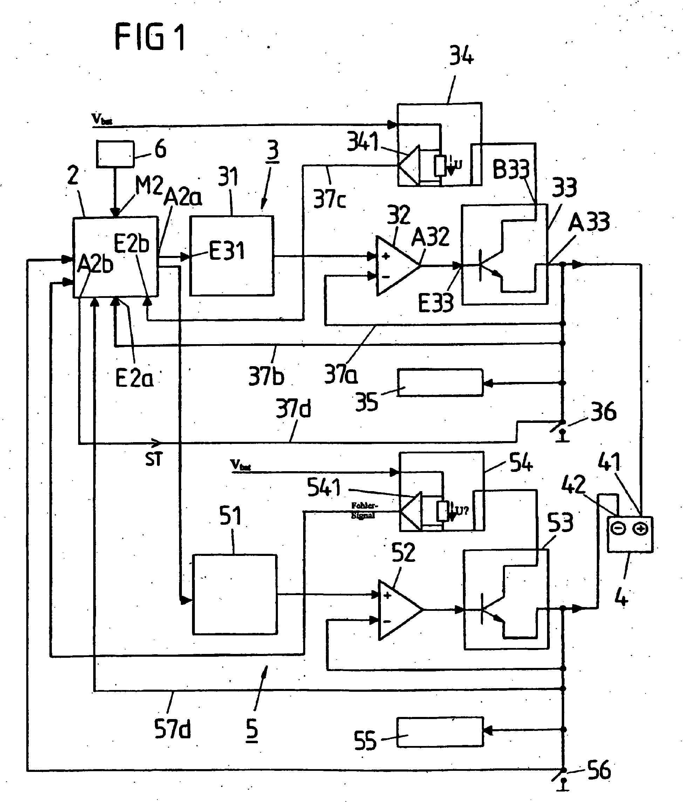

In der Figur 1 ist eine Steuereinrichtung mit einem Mikroprozessor 2 gezeigt, der über einen in der Figur 1 oberen Steuerzweig 3 mit einem "Plus-Anschluss" eines elektrochromatischen, also elektrisch abblendbaren Kraftfahrzeugspiegels 4 verbunden ist. Über einen in der Figur 1 unteren Steuerzweig 5 ist der Mikroprozessor 2 an einen "Minus-Anschluss" des Kraftfahrzeugspiegels 4 angeschlossen.

Der obere Steuerzweig 3 und der untere Steuerzweig 5 bilden eine Brückenschaltung, mit der sich die Polarität an den beiden Anschlüssen des Spiegels 4 umschalten lässt.

Der obere Steuerzweig 3 weist einen D/A-Wandler 31, einen Operationsverstärker 32, einen Linearverstärker 33, eine Masseschluss-Schutzeinrichtung 34, eine Vbat-Kurzschluss-Schutzeinrichtung 35 und einen steuerbaren Schalter 36 auf. Der Linearverstärker 33 und der Operationsverstärker 32 bilden gemeinsam einen Linearregler.

Ein Eingang E31 des D/A-Wandlers 31 ist an einen ersten Steuerausgang A2a des Mikroprozessors 2 angeschlossen. Ausgangsseitig ist der D/A-Wandler 31 mit einem "Plus-Eingang" des Operationsverstärkers 32 verbunden. Einem Ausgang A32 des Operationsverstärkers 32 ist ein Eingang E33 des Linearverstärkers 33 nachgeschaltet, dessen Ausgang A33 mit dem Plus-Anschluss 41 des Kraftfahrzeugspiegels 4 in Verbindung steht. Der Linearverstärker 33 weist darüber hinaus einen Stromversorgungseingang B33 auf, über den der Linearverstärker 33 mit der Masseschluss-Schutzeinrichtung 34 und über diese mit einer Batteriespannung Vbat verbunden ist.

Der Plus-Anschluss 41 des Kraftfahrzeugspiegels 4 ist über eine Regelschleifenleitung 37a auf den Minus-Eingang des Operrationsverstärkers 32 und über eine zweite Regelschleifenleitung 37b auf einen Steuereingang E2a des Mikroprozessors 2 "rückgekoppelt".

Wie in der Figur 1 gezeigt, kann der Linearverstärker 33 beispielsweise durch einen npn-Transistor gebildet sein, dessen Basis-Anschluss den Eingang E33 des Linearverstärkers 33 und dessen Kollektoranschluss den Batterieanschluss B33 des Linearverstärkers 33 bilden. Der Emitter-Anschluss des npn-Transistors bildet den Ausgang A33 des Linearverstärkers 33.

Die Masseschluss-Schutzeinrichtung 34 weist einen Shunt-Widerstand R auf, dem ein zweiter Operationsverstärker 341 zugeordnet ist. Der Ausgang des zweiten Operationsverstärkers 341 ist über eine erste Steuerleitung 37c mit einem zweiten Steuereingang E2b des Mikroprozessors 2 verbunden. Alternativ kann die erste Steuerleitung 37c auch mit dem Steuereingang E2a des Mikroprozessors 2 verbunden sein.

Über eine zweite Steuerleitung 37d steht ein Steueranschluss des Schalters 36 mit einem zweiten Steuerausgang A2b des Mikroprozessors 2 in Verbindung.

Der untere Steuerzweig 5 ist mit dem oberen Steuerzweig 3 baugleich; er weist einen D/A-Wandler 51, einen Operationsverstärker 52, einen Linearverstärker 53, eine Masseschluss-Schutzeinrichtung 54, eine Vbat-Kurzschluss-Schutzeinrichtung 55 und einen steuerbaren Schalter 56 auf. Im Übrigen wird bezüglich des Aufbaus des unteren Steuerzweiges 5 sowie bezüglich des Anschlusses des unteren Steuerzweiges 5 an den Mikroprozessor 2 auf die obigen Ausführungen im Zusammenhang mit dem oberen Steuerzweig 3 verwiesen.

Nachfolgend wird beispielhaft davon ausgegangen, dass der Kraftfahrzeugspiegel 4 bei einer Spannung (Ist-Spannung) von Null Volt nicht abgeblendet ist und somit das auf den Spiegel einfallende Licht quasi vollständig reflektiert. Bei einer Ist-Spannung von 0,7 Volt soll der Spiegel seinen Abblendzustand aufweisen, bei dem der Spiegel teilweise abgeblendet ist und lediglich einen Teil des einfallenden Lichts reflektiert. Die maximal zulässige Betriebsspannung (Maximalspannung) des Kraftfahrzeugspiegels 4 soll beispielsweise 1,4 Volt betragen.

Die Steuereinrichtung gemäß der Figur 1 wird wie folgt betrieben:

1. Aufladen des Kraftfahrzeugspiegels 4:

Bei einer Ist-Spannung von 0 Volt befindet sich der Kraftfahrzeugspiegel 4 in seinem Normalzustand, also seinem nicht abgeblendeten Zustand. Fällt nun auf den Kraftfahrzeugspiegel bei detektierter lichtschwacher Umgebung sehr intensives Licht ein, so wird dies mit einem an einem Messeingang M2 des Mikroprozessors 2 angeschlossenen Photodetektor 6 festgestellt, und es wird ein entsprechendes Messsignal zum Mikroprozessor 2 übertragen. Der Mikroprozessor 2 wird den Kraftfahrzeugspiegel 4 nun abblenden, indem er den Spiegel auf eine Abblendspannung von 0,7 Volt auflädt. Die Lichtintensität der Umgebung kann der Mikroprozessor beispielsweise mit einem in der Figur 1 nicht dargestellten weiteren Photodetektor messen.

Um eine möglichst kurze Aufladezeit zu erreichen, steuert der Mikroprozessor 2 den D/A-Wandler 31 derart an, dass an dem Ausgang des D/A-Wandlers 31 und damit an dem Ausgang des Linearverstärkers 33 sowie am Plusanschluss des Kraftfahrzeugspiegels 4 die am Spiegel maximal zulässige Maximalspannung $UI = Umax = 1,4$ Volt anliegt.

Der Minus-Anschluss 42 des Kraftfahrzeugspiegels 4 wird auf Masse gelegt, indem der Masseschalter 56 geschlossen wird.

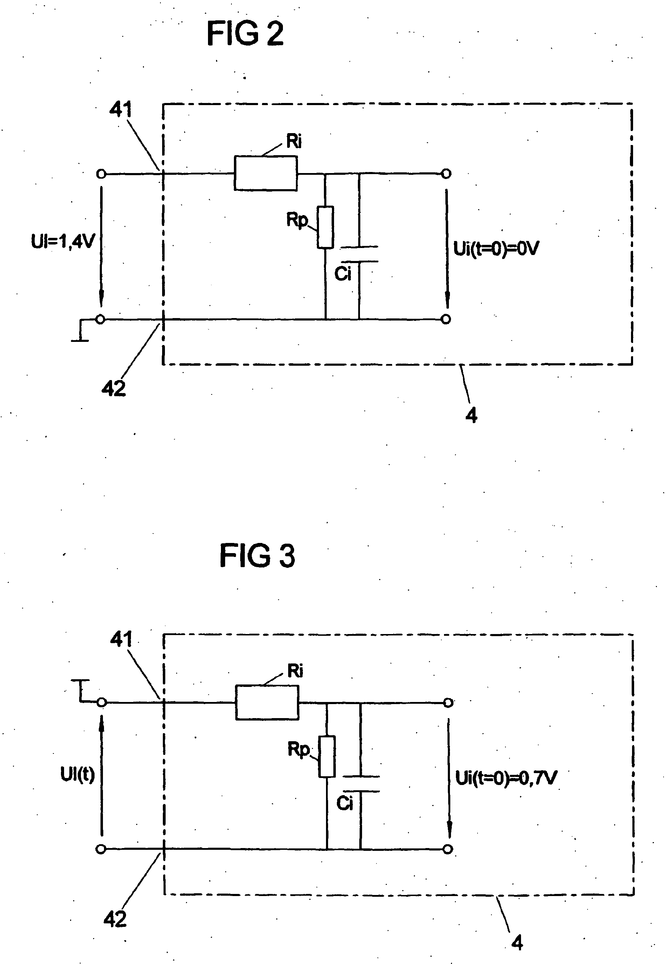

Die Potentialdifferenz und damit die Ladespannung UI an den Anschlüssen des Kraftfahrzeugspiegels 4 beträgt somit $UI = 1,4$ Volt (vgl. Figur 2).

Mit der Ladespannung von $UI = 1,4$ Volt wird nun die innere, durch einen Parallelwiderstand Rp verlustbehaftete Kapazität Ci des Kraftfahrzeugspiegels 4 aufgeladen. Da die Zielspannung aber lediglich 0,7 Volt beträgt, muss der Ladezustand des Kraftfahrzeugspiegels 4 während des Aufladens überprüft werden, um zu vermeiden, dass die Ist-Spannung Ui(t) des Spiegels die gewünschten 0,7 Volt überschreitet.

Ein wesentlicher Vorteil dieses Ausführungsbeispiels besteht darin, dass in sehr einfacher Weise eine große Umschaltgeschwindigkeit beim Umschalten bzw.

Umladen des Spiegels erreicht wird. Dabei wird zum Aufladen bzw. Entladen des Spiegels - also zum Umladen der inneren Kapazität des Spiegels - eine betragsmäßig höhere Spannung gewählt, als es dem tatsächlich gewünschten bzw. zu erzielenden Ladezustand des Spiegels und damit der einzustellenden "Ziel-Spannung" am Spiegel entsprechen würde. Dadurch, dass die Ladespannung größer als die Zielspannung ist, ist die Umladezeit nicht mehr allein durch die elektrische Zeitkonstante des Spiegels, sondern darüber hinaus durch das Verhältnis zwischen der zu erzielenden Spannungsänderung am Spiegel und der angelegten Ladespannung vorgegeben. Ist die Ladespannung beim Umladen beispielsweise doppelt so groß wie die zu erzielende Spannungsänderung am Spiegel, so ist die "Umladezeit" und damit die Umschaltzeit des Spiegels in erster Näherung nur halb so groß wie bei einem Ladeverfahren, bei dem die Ladespannung mit der "Zielspannung" übereinstimmt.

Zum Messen der Ist-Spannung Ui(t) wird der Ladevorgang unterbrochen und der Kraftfahrzeugspiegel 4 hochohmig geschaltet. Das "Hochohmigschalten" wird dabei dadurch erreicht, dass die beiden Schalter 35 und 56 geöffnet und die Transistoren der beiden Linearverstärker 33 und 53 durch Anlegen entsprechend geringer Basis-Emitterspannungen (< ca. 0,7 Volt) "gesperrt" werden.

Nach dem "Hochohmigschalten" fließt kein Ladestrom durch den Kraftfahrzeugspiegel 4 mehr, so dass kein Spannungsabfall an dem inneren ohmschen Widerstand Ri des Kraftfahrzeugspiegels 4 auftreten kann. Nach dem "Hochohmigschalten" wird die Ist-Spannung Ui an der inneren Kapazität Ci des Kraftfahrzeugspiegels 4 somit sehr exakt gemessen. Die Messung der Ist-Spannung Ui erfolgt über die Regelleitungen 37b und 57b, über die der Mikroprozessor 2 mit den Potentialen an den Anschlüssen des Kraftfahrzeugspiegels 4 beaufschlagt ist. Ein wesentlicher Vorteil des Verfahrens dieses Ausführungsbeispiels besteht darin, dass Messfehler beim Messen des Ladezustands des Spiegels vermieden werden.

Stellt der Mikroprozessor 2 fest, dass die Ist-Spannung Ui die gewünschte Abblendspannung von 0,7 Volt noch nicht erreicht hat, so wird der Ladevorgang mit der Ladespannung von 1,4 Volt, also der Maximalspannung, fortgesetzt.

Stellt der Mikroprozessor 2 hingegen fest, dass die Ist-Spannung Ui die gewünschte Abblendspannung bzw. Sollspannung von 0,7 Volt erreicht hat bzw. in einem für die Abblendspannung vorgegebenen Toleranzband liegt, so wird der Ladevorgang beendet und die Ladespannung auf die Soll-Spannung Usoll = 0,7 Volt reduziert. Anschließend schaltet der Mikroprozessor in einen Regelprozess, bei dem die Spannung von Usoll = 0,7 Volt an den Anschlussklemmen des Kraftfahrzeugspiegels 4 konstant gehalten wird. Zum Messen der Ist-Spannung Ui am Kraftfahrzeugspiegel 4 wird dieser während der "Regelphase" nicht mehr hochohmig geschaltet, da quasi kein Ladestrom mehr fließt und Messfehler durch einen am inneren Widerstand Ri des Spiegels 4 auftretenden Spannungsabfall vernachlässigbar ist. Die hardwareseitige Regelung der Spannung am Kraftfahrzeugspiegel 4 übernimmt in dieser Phase der Operationsverstärker 32.

Die Regelspannung von 0,7 Volt zum Halten des Abblendzustands kann als "Führungssignal" für den Abblendzustand bezeichnet werden.

2. Entladen des Kraftfahrzeugspiegels 4:

Bei einer Ist-Spannung Ui am Kraftfahrzeugspiegel 4 von 0,7 Volt befindet sich der Kraftfahrzeugspiegel in seinem Abblendzustand. Fällt nun auf den Kraftfahrzeugspiegel - verglichen mit der Lichtintensität des Umgebungslichts - kein intensives Licht mehr, so wird dies mit den Photodetektoren festgestellt, und es wird ein entsprechendes Messsignal zum Mikroprozessor 2 übertragen. Der Mikroprozessor 2 wird den Kraftfahrzeugspiegel 4 nun in den Normalzustand bringen, indem er den Spiegel auf eine Soll-Spannung Usoll = 0 Volt entlädt.

Um eine möglichst kurze Entladezeit zu erreichen, steuert der Mikroprozessor 2 den Schalter 36 derart an, dass der Plusanschluss 41 des Spiegels 4 mit Masse verbunden wird.

Der Minus-Anschluss 42 des Kraftfahrzeugspiegels 4 wird über den D/A-Wandler 51, den Operationsverstärker 52 und den Linearverstärker 53 auf ein positives Potential gelegt, das betragsmäßig der Differenzspannung zwischen der zulässigen Maximalspannung des Spiegels (1,4 Volt) und der Ist-Spannung (0,7 Volt) Ui des Spiegels entspricht. Mit anderen Worten wird an den Minusanschluss 42 des Kraftfahrzeugspiegels 4 eine Spannung von UI = 0,7 Volt angelegt. Damit ergibt sich aufgrund der Ist-Spannung des Kraftfahrzeugspiegels 4 von Ui = +0,7 Volt eine Spannung am Widerstand Ri des Kraftfahrzeugspiegels 4 von 1,4 Volt.

Mit der Entladespannung von UI = 0,7 Volt wird nun die innere Kapazität Ci des Kraftfahrzeugspiegels 4 entladen. Da die Zielspannung 0 Volt beträgt, muss der Ladezustand des Kraftfahrzeugspiegels 4 während des Entladens überprüft werden, um zu vermeiden, dass die Ist-Spannung Ui der Kapazität Ci Null Volt unterschreitet.

Zum Messen der Ist-Spannung Ui wird der Ladevorgang unterbrochen und der Kraftfahrzeugspiegel 4 - wie bereits erläutert - hochohmig geschaltet. Stellt der Mikroprozessor 2 fest, dass die Ist-Spannung Ui die gewünschte Normalspannung von 0 Volt noch nicht erreicht hat, so wird der Entladevorgang fortgesetzt.

Bei dem Entladevorgang wird sich die Ist-Spannung Ui an der Kapazität Ci des Kraftfahrzeugspiegels 4 reduzieren, so dass die Entladespannung UI am Minus-Anschluss des Kraftfahrzeugspiegels 4 erhöht werden kann. Um eine minimale Entladezeit zu erreichen, sollte die Entladespannung UI(t) am Minus-Anschluss 42 des Kraftfahrzeugspiegels 4 in Abhängigkeit von der jeweiligen Ist-Spannung Ui(t) des Kraftfahrzeugspiegels 4 wie folgt gewählt bzw. "mitgeführt" werden:

$$UI(t) = - Ui(t) + Umax,$$

wobei Umax die Maximalspannung am Kraftfahrzeugspiegel 4 von 1,4 Volt bezeichnet (vgl. Figur 3).

Die Spannung UI(t) erhöht sich damit betragsmäßig von 0,7 Volt zu Beginn des Entladevorgangs (t=0) auf einen Endwertwert von 1,4 Volt beim Abschluss des Entladevorgangs.

Sobald der Mikroprozessor 2 feststellt, dass die Ist-Spannung Ui die gewünschte Sollspannung Usoll = 0 Volt erreicht hat bzw. in einem vorgegebenen Toleranzband liegt, wird der Entladevorgang beendet und die Spannung am Minus-Anschluss des Kraftfahrzeugspiegels 4 auf 0 Volt reduziert. Anschließend schaltet der Mikroprozessor in einen Regelprozess, bei dem die Soll-Spannung von 0 Volt an den Anschlussklemmen des Kraftfahrzeugspiegels 4 konstant gehalten wird. Zum Messen der Ist-Spannung Ui im nachfolgenden Regelprozess muss der Spiegel 4 nicht mehr hochohmig geschaltet werden.

Die Regelspannung von 0 Volt zum Halten des Normalzustands kann als "Führungssignal" für den Normalzustand bezeichnet werden.

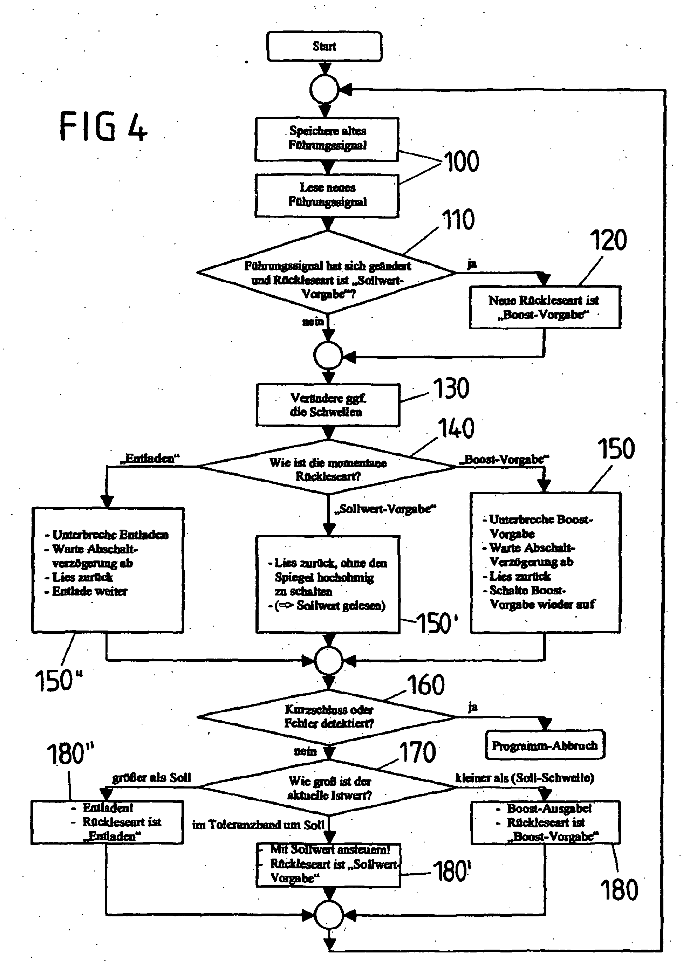

In der Figur 4 ist ein Flussdiagramm dargestellt, das beispielhaft die Arbeitsweise des Mikroprozessors 2 gemäß der Figur 1 zeigt.

Im Prozessschritt 100 speichert der Mikroprozessor 2 das zuletzt bearbeitete "Führungssignal" und bestimmt das jeweils aktuelle Führungssignal, indem er beispielsweise die Informationen der Photodetektoren auswertet. Alternativ kann dem Mikroprozessor 2 das Führungssignal auch über einen Schnittstellenanschluss von außen vorgegeben werden. Soll der Spiegel 4 in seinem jeweiligen Zustand - also abgeblendet oder nicht abgeblendet - verbleiben, so ändert sich das Führungssignal nicht. Andernfalls kommt es zu einer Änderung des Führungssignals.

Während des Prozessschritts 110 prüft der Mikroprozessor 2, ob sich das Führungssignal verändert hat. Außerdem prüft der Mikroprozessor 2, in welcher "Rückleseart" er sich befindet. Unterschieden werden die Rücklesearten "Sollwert-Vorgabe", "Boost-Vorgabe" und "Entladen". Bei den Rücklesearten "Boost-Vorgabe" und "Entladen" wird der Kraftfahrzeugspiegel 4 hochohmig geschaltet, bevor sein Ladezustand gemessen wird. Bei der Rückleseart "Sollwert-Vorgabe" liest der Mikroprozessor 2 über die Leitungen 37b und 57b die an den beiden Anschlüssen des Kraftfahrzeugspiegels 4 anliegende Spannung zurück, ohne den Spiegel hochohmig zu schalten; gemessen wird somit nicht der tatsächliche Ladezustand des Spiegels, sondern nur die außen anliegende Steuerspannungen der beiden Linearverstärker 33 und 53. Bei der Rückleseart "Sollwert-Vorgabe" wird davon ausgegangen, dass der Kraftfahrzeugspiegel 4 seine Soll-Spannung erreicht hat, so dass quasi kein Ladestrom mehr fließt und ein Hochohmigschalten des Kraftfahrzeugspiegels 4 verzichtbar ist. Die Rückleseart "Sollwert-Vorgabe" wird somit ausschließlich dann eingesetzt, wenn der Kraftfahrzeugspiegel 4 seinen jeweiligen "Betriebsendzustand" erreicht hat und die Ist-Spannung nur konstant gehalten werden muss. Die hardwareseitige Regelung der Spannung am Kraftfahrzeugspiegel 4 übernimmt in dieser Phase der Operationsverstärker 32.

Nachfolgend wird beispielhaft davon ausgegangen, dass der Kraftfahrzeugspiegel 4 entladen ist und auf eine Ist-Spannung von Null Volt vom Mikroprozessor 2 geregelt wird. Die Rückleseart ist somit "Sollwert-Vorgabe". Der Kraftfahrzeugspiegel 4 soll nun abgeblendet werden, indem er auf eine Abblendspannung von 0,7 Volt "aufgeladen" wird; hierzu wird zunächst das neue Führungssignal auf 1,4 Volt eingestellt.

Der Mikroprozessor 2 springt nun zum Prozessschritt 120, bei dem die Rückleseart auf "Boost"-Vorgabe umgestellt wird. Dies bedeutet, dass der Mikroprozessor 2 die Ist-Spannung Ui des Spiegels zukünftig hochohmig auslesen wird.

Beim Prozessschritt 130 wird eine Spannung von 1,4 Volt an die Anschlüsse des Kraftfahrzeugspiegels 4 angelegt. Anschließend - vgl. Prozessschritte 140 und 150 - wird die Ist-Spannung am Kraftfahrzeugspiegel 4 hochohmig gemessen bzw. "rückgelesen".

Falls kein Kurzschluss oder sonstiger Fehler festgestellt wird (Prozessschritt 160), springt der Mikroprozessor 2 zum Prozessschritt 170 und von dort zu dem Prozessschritt 180, bei dem der Kraftfahrzeugspiegel 4 aufgeladen und damit abgeblendet wird.

Die Schleife bestehend aus den Prozessschritten 100, 110, 130, 140 150, 160, 170 und 180 wird solange durchlaufen, bis der Kraftfahrzeugspiegel 4 seinen Sollzustand bzw. eine Ist-Spannung von 0,7 Volt erreicht hat. Anschließend wird die Rückleseart auf "Sollwert-Vorgabe" gestellt und die Spannung am Kraftfahrzeugspiegel 4 auf 0,7 Volt geregelt (vgl. insbesondere Schritte 150', 170 und 180').

Zum Entladen wird in entsprechender Weise vorgegangen. Da jedoch die Ist-Spannung Ui am Kraftfahrzeugspiegel 4 größer als die Soll-Spannung ist, wird in den Entladezweig 180" geschaltet, in dem der Kraftfahrzeugspiegel 4 entladen wird. Die Rücklesart ist dementsprechend nachfolgend "Entladen" (vgl. insbesondere Schritt 150").

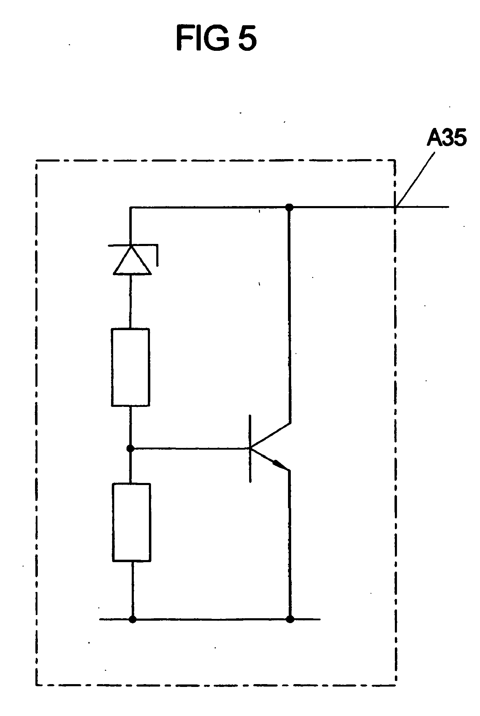

Figur 5 zeigt ein Ausführungsbeispiel für die Vbat-Kurzschluss-Schutzeinrichtungen 35 und 55 gemäß der Figur 1. Man erkennt eine Zenerdiode, die mit ihrem einem Anschluss mit dem Anschluss A35 (bzw. A55) der Vbat-Kurzschluss-Schutzeinrichtung 35 (bzw. 55) und damit mit dem Kraftfahrzeugspiegel 4 verbunden ist. Mit ihrem anderen Anschluss ist die Zenerdiode an einen durch zwei Widerstände gebildeten Spannungsteiler angeschlossen, der mit einem Basisanschluss eines npn-Transistors in Verbindung steht. Der Kollektoranschluss des npn-Transistors ist mit dem Anschluss A35 (bzw. A55) verbunden. Der Emitteranschluss liegt auf Masse.

Steigt das Spannungspotential an dem Anschluss A35 bzw. A55 über einen durch die Durchbruchspannung der Zenerdiode und die Widerstände vorgegebenen Schwellwert, so schaltet der npn-Transistor durch, so dass die Spannung am Spiegelanschluss auf Masse gezogen wird.

**Bezugszeichenliste**

| | |
|---|---|
| 2 | Mikroprozessor |
| 3 | oberer Steuerzweig |
| 4 | Kraftfahrzeugspiegel |
| 5 | unterer Steuerzweig |
| 31 | D/A-Wandler |
| 32 | Operationsverstärker |
| 33 | Linearverstärker, |
| 34 | Masseschluss-Schutzeinrichtung |
| 35 | Vbat-Kurzschluss-Schutzeinrichtung |
| 36 | steuerbarer Schalter |
| 37a | Regelschleifenleitung |
| 37b | zweite Regelschleifenleitung |
| 37c | erste Steuerleitung |
| 37d | zweite Steuerleitung |
| 41 | Plusanschluss des Spiegels |
| 42 | Minusanschluss des Spiegels |
| 51 | D/A-Wandler |
| 52 | Operationsverstärker |
| 53 | Linearverstärker |
| 54 | Masseschluss-Schutzeinrichtung |
| 55 | Vbat-Kurzschluss-Schutzeinrichtung |
| 56 | steuerbarer Schalter |
| 341 | zweiter Operationsverstärker |
| R | Shunt-Widerstand R |

**Patentansprüche**

1. Steuereinrichtung zum Ansteuern eines elektrisch abblendbaren Spiegels (4), die einen vorgegebenen Abblendgrad des Spiegels einstellt, indem sie den Spiegel auf eine für den jeweils gewünschten Abblendgrad vorgegebene Soll-Spannung (Usoll) auflädt bzw. entlädt, **dadurch gekennzeichnet, dass** die Steuereinrichtung derart ausgestaltet ist, dass sie den Ladezustand des Spiegels (4) überwacht, indem sie den Spiegel von der Ladespannung (UI) elektrisch abtrennt und die am Spiegel (4) vorliegende Ist-Spannung (Ui) hochohmig misst.

2. Steuereinrichtung nach Anspruch 1, die ausgestaltet ist

    - einen vorgebbaren Abblendgrad des Spiegels (4) einzustellen, indem diese den Spiegel (4) auf eine dem vorgegebenen Abblendgrad zugeordnete Sollspannung (Usoll) auflädt beziehungsweise entlädt, und

    - zur Einstellung des Abblendgrades an den Spiegel (4) eine Ladespannung (UI) anzulegen, die die für den gewünschten Abblendgrad erforderliche Soll-Spannung (Usoll) betragsmäßig überschreitet.

3. Steuereinrichtung nach einem der Ansprüche 1 oder 2, **dadurch gekennzeichnet, dass** die Steuereinrichtung einen vorgegebenen Abblendgrad des Spiegels einstellt, indem sie den Spiegel auf eine für den jeweils gewünschten Abblendgrad vorgegebene Soll-Spannung (Usoll) auflädt bzw. entlädt, und die Steuereinrichtung derart ausgestaltet ist, dass sie zum Umschalten, insbesondere zum Erhöhen, des Abblendgrades des Spiegels an den Spiegel eine Ladespannung (UI) anlegt, die die für den gewünschten Abblendgrad erforderliche Soll-Spannung (Usoll) betragsmäßig überschreitet, und dass sie nach Erreichen des gewünschten Abblendgrades die jeweilige Soll-Spannung (Usoll) an den Spiegel anlegt.

4. Steuereinrichtung nach einem der Ansprüche 1 bis 3, **dadurch gekennzeichnet, dass** die Steuereinrichtung eine Vollbrückenschaltung (3, 5) aufweist.

5. Steuereinrichtung nach einem der vorangehenden Ansprüche, **dadurch gekennzeichnet, dass** die Steuereinrichtung mit einem Sensor (6) verbunden ist, der das auf den Spiegel (4) fallende Licht misst, und die Steuereinrichtung derart ausgestaltet ist, dass sie den Abblendgrad des Spiegels zumindest in Abhängigkeit von der einfallenden Lichtleistung vorgibt.

6. Steuereinrichtung nach einem der vorangehenden Ansprüche, **dadurch gekennzeichnet, dass** die Steuereinrichtung mit einem Außenspiegel oder mit einem Innenspiegel eines Kraftfahrzeugs verbunden ist und diesen ansteuert.

7. Steuereinrichtung nach einem der vorhergehenden Ansprüche, **dadurch gekennzeichnet, dass** zur Einstellung eines vorgegebenen Abblendgrades des Spiegels (4) die Steuerungseinrichtung ausgebildet ist, den Spiegel (4) auf eine für den jeweils gewünschten Abblendgrad vorgegebene Soll-Spannung (Usoll) aufzuladen beziehungsweise zu entladen, wobei ein hochohmiger Messeingang der Steuereinrichtung zur Überwachung des Ladezustandes mit dem Spiegel (4) verbunden oder verbindbar ist

8. Steuereinrichtung nach einem der vorhergehenden Ansprüche, **dadurch gekennzeichnet, dass** diese zum Hochohmigschalten des Spiegels zumindest einen Schalter (36,56) oder einen Linearverstärker (33, 53) aufweist.

9. Verfahren zum Ansteuern eines elektrisch abblendbaren Kraftfahrzeugspiegels (4), bei dem ein vorgegebener Abblendgrad des Spiegels (4) eingestellt wird, indem der Spiegel auf eine vorgegebene Soll-Spannung (Usoll) aufgeladen bzw. entladen wird, **dadurch gekennzeichnet, dass** der Ladezustand des Spiegels (4) überwacht wird, indem der Spiegel von der Ladespannung (UI) elektrisch abtrennt wird und die am Spiegel (4) vorliegende Ist-Spannung (Ui) hochohmig gemessen wird.

10. Verfahren nach Anspruch 9, **dadurch gekennzeichnet, dass** zum Umschalten, insbesondere zum Erhöhen, des Abblendgrades an den Spiegel eine Ladespannung (UI) angelegt wird, die die für den gewünschten Abblendgrad erforderliche Soll-Spannung (Usoll) betragsmäßig überschreitet, und dass nach Erreichen des gewünschten Abblendgrades die Soll-Spannung an den Spiegel angelegt wird.

11. Verfahren nach Anspruch 10, **dadurch gekennzeichnet, dass** während des Umschaltens, insbesondere während des Erhöhens des Abblendgrades, die für den Spiegel jeweils maximal zulässige Ladespannung (UI) angelegt wird.

12. Verfahren nach einem der Ansprüche 10 oder 11, **dadurch gekennzeichnet, dass** während des Aufladens des Spiegels an den Spiegel eine Ladespannung angelegt wird, die der für den Spiegel maximal zulässigen Maximalspannung (Umax) entspricht.

13. Verfahren nach Anspruch 12, **dadurch gekennzeichnet, dass** die Ladespannung von der Maximalspannung (Umax) auf die Soll-Spannung (Usoll) umgeschaltet wird, sobald die Ist-Spannung (Ui) des Spiegels der Soll-Spannung (Usoll) entspricht oder innerhalb eines für die Soll-Spannung vorgegebenen Toleranzbandes liegt.

14. Verfahren nach einem der Ansprüche 10 bis 13, **dadurch gekennzeichnet, dass** zum Entladen des Spiegels die Ladespannung (UI) umgepolt wird und dass an den Spiegel eine Spannung angelegt wird, die betragsmäßig der Differenzspannung (Umax - Ui) zwischen der zulässigen Maximalspannung (Umax) des Spiegels und der jeweiligen Ist-Spannung (Ui) des Spiegels entspricht.

15. Verfahren nach Anspruch 14, **dadurch gekennzeichnet, dass** die Ladespannung beim Entladen des Spiegels (4) derart mitgeführt wird, dass die an dem Spiegel anliegende Spannung während des Entladevorgangs, insbesondere während des gesamten Entladevorgangs, betragsmäßig der Differenzspannung zwischen der zulässigen Maximalspannung des Spiegels und der Ist-Spannung des Spiegels entspricht.

16. Verfahren nach einem der Ansprüche 10 bis 15, **dadurch gekennzeichnet, dass** zumindest das auf den Spiegel fallende Licht gemessen wird und der Abblendgrad des Spiegels zumindest in Abhängigkeit von der einfallenden Lichtleistung vorgegeben wird.

17. Verfahren nach einem der Ansprüche 10 bis 16, **dadurch gekennzeichnet, dass** der elektrische Ladezustand der Spiegels zyklisch oder kontinuierlich überwacht wird.

18. Verfahren nach einem der Ansprüche 10 bis 17, **dadurch gekennzeichnet, dass** der Ladezustand des Spiegels außerdem überwacht wird, indem der durch den Spiegel fließende Lade- bzw. Entladestrom erfasst und ausgewertet wird.

19. Verfahren nach Anspruch 18, **dadurch gekennzeichnet, dass** der durch den Spiegel fließende Lade- bzw. Entladestrom integriert wird, und dass das resultierende Integrationsergebnis zur Bestimmung des Ladezustands des Spiegels herangezogen wird.

## Claims

1. Control device for actuating an electrically dimmable mirror (4), which sets a predefined degree of dimming of the mirror by virtue of the fact that said control device charges or discharges the mirror to a setpoint voltage (Usoll) which is predefined for the respectively desired degree of dimming, **characterized in that** the control device is configured in such a way that it monitors the charge state of the mirror (4) by electrically disconnecting the mirror from the charge voltage (UI), and measures with high impedance the actual voltage (Ui) which is present at the mirror (4).

2. Control device according to Claim 1 which is configured

   - for setting a predefined degree of dimming of the mirror (4) by virtue of the fact that said control device charges or discharges the mirror (4) to a setpoint voltage (Usoll) which is assigned to the predefined degree of dimming, and
   - to apply, for the purpose of setting the degree of dimming, a charge voltage (UI) to the mirror (4) which exceeds in absolute terms the setpoint voltage (Usoll) which is necessary for the desired degree of dimming.

3. Control device according to either of Claims 1 and 2, **characterized in that** the control device sets a predefined degree of dimming of the mirror by virtue of the fact that said control device charges or discharges the mirror to a setpoint voltage (Usoll) which is predefined for the respectively desired degree of dimming, and the control device is configured in such a way that, in order to switch over, in particular in order to increase, the degree of dimming of the mirror, it applies to the mirror a charge voltage (U1) which exceeds in absolute terms the setpoint voltage (Usoll) which is necessary for the desired degree of dimming, and that it applies the respective setpoint voltage (Usoll) to the mirror after the desired degree of dimming has been reached.

4. Control device according to one of claims 1 to 3, **characterized in that** the control device has a full bridge circuit (3, 5).

5. Control device according to one of the preceding claims, **characterized in that** the control device is connected to a sensor (6) which measures light which is incident on the mirror (4), and the control device is configured in such a way that it predefines the degree of dimming of the mirror at least as a function of the incident light power.

6. Control device according to one of the preceding claims, **characterized in that** the control device is connected to an external mirror or to an internal mirror of a motor vehicle and actuates it.

7. Control device according to one of the preceding claims, **characterized in that**, in order to set a predefined degree of dimming of the mirror (4), the control device is designed to charge or discharge the mirror (4) to a setpoint voltage (Usoll) which is predefined for the respectively desired degree of dimming, a high-impedance measurement input of the control device being connected or being capable of being connected to the mirror (4) in order to monitor the charge state.

8. Control device according to one of the preceding claims, **characterized in that**, in order to switch the mirror to a high impedance state, it has at least one switch (36, 56) or a linear amplifier (33, 53).

9. Method for actuating an electrically dimmable motor vehicle mirror (4) in which a predefined degree of dimming of the mirror (4) is set by virtue of the fact that the mirror is charged or discharged to a predefined setpoint voltage (Usoll), **characterized in that** the charge state of the mirror (4) is monitored by virtue of the fact that the mirror is electrically disconnected from the charge voltage (UI) and the actual voltage (Ui) which is present at the mirror (4) is measured with high impedance.

10. Method according to Claim 9, **characterized in that**, for the purpose of switching over, in particular for increasing, the degree of dimming, a charge voltage (U1) which exceeds in absolute terms the setpoint voltage (Usoll) which is necessary for the desired degree of dimming is applied to the mirror, and **in that** the setpoint voltage is applied to the mirror after the desired degree of dimming has been attained.

11. Method according to Claim 10, **characterized in that** the respective maximum permitted charge voltage (U1) for the mirror is applied during the switching over, in particular during the increasing, of the degree of dimming.

12. Method according to either of Claims 10 and 11, **characterized in that**, during the charging of the mirror, a charge voltage which corresponds to the maximum permitted voltage (Umax) for the mirror is applied to the mirror.

13. Method according to Claim 12, **characterized in that** the charge voltage is switched over from the maximum voltage (Umax) to the setpoint voltage (Usoll) as soon as the actual voltage (Ui) of the mirror corresponds to the setpoint voltage (Usoll) or lies within a tolerance band which is predefined for the setpoint voltage.

14. Method according to one of Claims 10 to 13, **characterized in that** in order to discharge the mirror, the polarity of the charge voltage (UI) is reversed, and **in that** a voltage which corresponds in absolute terms to the difference in voltage (Umax-Ui) between the maximum permitted voltage (Umax) of the mirror and the respective actual voltage (Ui) of the mirror is applied to the mirror.

15. Method according to Claim 14, **characterized in that**, during the discharging of the mirror (4), the charge voltage is simultaneously adapted in such a way that the voltage which is present at the mirror during the discharge process, in particular during the entire discharge process, corresponds in absolute terms to the difference in voltage between the maximum permitted voltage of the mirror and the actual voltage of the mirror.

16. Method according to one of Claims 10 to 15, **characterized in that** at least the light which is incident on the mirror is measured and the degree of dimming of the mirror is predefined at least as a function of the incident light power.

17. Method according to one of Claims 10 to 16, **characterized in that** the electrical charge state of the mirror is monitored cyclically or continuously.

18. Method according to one of Claims 10 to 17, **characterized in that** the charge state of the mirror is also monitored by sensing the charge current or discharge current flowing through the mirror and evaluating it.

19. Method according to Claim 18, **characterized in that** the charge current or discharge current flowing through the mirror is integrated, and **in that** the resulting integration result is used to determine the charge state of the mirror.

## Revendications

1. Dispositif de commande d'un miroir antiéblouissant électrique (4), qui règle un degré d'antiéblouissement prédéterminé du miroir, dans lequel il charge ou décharge le miroir d'une tension de consigne (Usoll) prédéterminée pour le degré d'antiéblouissement désiré, **caractérisé en ce que** le dispositif de commande est réalisé de telle sorte qu'il contrôle l'état de charge du miroir (4), dans lequel il sépare électriquement le miroir de la tension de charge (UI) et mesure à valeur ohmique élevée la tension réelle (Ui) présente sur le miroir (4).

2. Dispositif de commande selon la revendication 1, qui est réalisé

  - en vue d'établir un degré d'antiéblouissement pouvant être prédéterminé du miroir (4), dans lequel celui-ci charge, décharge, respectivement, le miroir (4) à une tension de consigne (Usoll) associée au degré d'antiéblouissement prescrit, et
  - en vue d'appliquer une tension de charge (U1) pour établir le degré d'antiéblouissement sur le miroir (4), qui dépasse modérément la tension de consigne (Usoll) nécessaire pour le degré d'antiéblouissement souhaité.

3. Dispositif de commande selon une des revendications 1 ou 2, **caractérisé en ce que** le dispositif de commande règle un degré d'antiéblouissement prédéterminé du miroir, dans lequel il charge ou décharge le miroir à une tension de consigne (Usoll) prescrite pour le degré d'antiéblouissement souhaité respectif, et le dispositif de commande est réalisé de telle sorte qu'en vue de la commutation, en particulier de l'accroissement, du degré d'antiéblouissement du miroir, il applique au miroir une tension de charge (U1), qui dépasse modérément la tension de consigne (Usoll) nécessaire pour le degré d'antiéblouissement souhaité, et **en ce qu'**après l'obtention du degré d'antiéblouissement, il applique au miroir la tension de consigne (Usoll) respective.

4. Dispositif de commande selon une des revendications 1 à 3, **caractérisé en ce qu'**il comporte un circuit en pont (3,5).

5. Dispositif de commande selon une des revendications précédentes, **caractérisé en ce que** le dispositif de commande est relié à un capteur (6), qui mesure la lumière incidente sur le miroir (4), et le dispositif de commande est réalisé de manière à prescrire le degré d'antiéblouissement du miroir au moins en fonction de la puissance lumineuse incidente.

6. Dispositif de commande selon une des revendications précédentes, **caractérisé en ce que** le dispositif de commande est réalisé à un miroir extérieur ou à un miroir intérieur d'un véhicule et commande celui-ci.

7. Dispositif de commande selon l'une des revendications précédentes, **caractérisé en ce qu'**en vue du réglage d'un degré d'antiéblouissement prédéterminé du miroir (4), le dispositif de commande est réalisé pour charger ou décharger le miroir (4) à une tension de consigne (Usoll) prescrite pour le degré d'antiéblouissement souhaité, une entrée de mesure à forte résistance ohmique du dispositif de commande en vue du contrôle de l'état de charge étant reliée ou reliable au miroir (4).

8. Dispositif de commande selon une des revendications précédentes, **caractérisé en ce que** celui-ci présente, en vue de la commutation à forte résistance ohmique du miroir au moins un commutateur (36, 56) ou un amplificateur linéaire (33,53).

9. Procédé de commande d'un miroir de véhicule (4) antiéblouissement électrique, dans lequel un degré d'antiéblouissement prédéterminé du miroir (4) est réglé, dans lequel le miroir est chargé ou déchargé à une tension de consigne (Usoll) prédéterminée, **caractérisé en ce que** l'état de charge du miroir (4) est contrôlé, dans lequel le miroir est séparé électriquement de la tension de charge (U1) et la tension réelle (Ui) présente sur le miroir st mesurée à forte résistance ohmique.

10. Procédé selon la revendication 9, **caractérisé en ce qu'**en vue de la commutation, en particulier de l'accroissement, du degré d'antiéblouissement, une tension de charge (U1) est appliquée au miroir, qui dépasse modérément la tension de consigne (Usoll) nécessaire pour le degré d'antiéblouissement souhaité et **en ce qu'**après l'obtention du degré d'antiéblouissement souhaité la tension de consigne est appliquée au miroir.

**11.** Procédé selon la revendication 10, **caractérisé en ce que** durant la commutation, en particulier durant l'accroissement du degré d'antiéblouissement, la tension de charge (U1) admissible maximale pour le miroir est appliquée.

**12.** Procédé selon une des revendications 10 ou 11, **caractérisé en ce que** durant la charge du miroir, une tension de charge est appliquée au miroir, qui correspond à la tension maximale (Umax) admissible pour le miroir.

**13.** Procédé selon la revendication 12, **caractérisé en ce que** la tension de charge est commutée de la tension maximale (Umax) à la tension de consigne (Usoll), dès que la tension réelle (Ui) du miroir correspond à la tension de consigne (Usoll) ou se trouve à l'intérieur d'une plage de tolérance prescrite pour la tension de consigne.

**14.** Procédé selon une des revendications 10 à 13, **caractérisé en ce qu'**en vue de la décharge du miroir, la tension de charge (U1) est inversée et **en ce qu'**au miroir est appliquée une tension, qui correspond sensiblement à la tension de ddifférence (Umx-U1) entre la tension maximale (Umax) admissible du miroir et la tension réelle (Ui) respective du miroir.

**15.** Procédé selon la revendication 14, **caractérisé en ce que** la tension de charge lors de la décharge du miroir (4) est accompagnée de telle sorte que la tension présente sur le miroir durant le processus de décharge, en particulier durant le processus de décharge globale, correspond sensiblement à la tension de différence entre la tension maximale admissible du miroir et la tension réelle de celui-ci.

**16.** Procédé selon une des revendications 10 à 15, **caractérisé en ce qu'**au moins la lumière incidente sur le miroir est mesurée et le degré d'antiéblouissement du miroir est prescrit au moins en fonction de la puissance lumineuse incidente.

**17.** Procédé selon une des revendications 10 à 16, **caractérisé en ce que** l'état de charge électrique du miroir est contrôlé cycliquement ou continûment.

**18.** Procédé selon une des revendications 10 à 17, **caractérisé en ce que** l'état de charge du miroir est en outre contrôlé; **en ce que** le courant de charge ou de décharge circulant à travers le miroir est détecté et évalué.

**19.** Procédé selon la revendication 18, **caractérisé en ce que** le courant de charge ou décharge circulant à travers le miroir est intégré, et **en ce que** le résultat d'intégration est mis à profit pour la détermination de l'état de charge du miroir.

# FIG 1

# FIG 2

UI=1,4V

Ri

Rp

Ci

Ui(t=0)=0V

41

42

4

# FIG 3

UI(t)

Ri

Rp

Ci

Ui(t=0)=0,7V

41

42

4

# FIG 4

Start

Speichere altes
Führungssignal — 100

Lese neues
Führungssignal — 110

Führungssignal hat sich geändert
und Rückleseart ist „Sollwert-
Vorgabe"? — 120

ja → Neue Rückleseart ist
„Boost-Vorgabe"

nein

Verändere ggf.
die Schwellen — 130

Wie ist die momentane
Rückleseart? — 140

„Entladen"

„Boost-Vorgabe" — 150

- Unterbreche Entladen
- Warte Abschaltverzögerung ab
- Lies zurück
- Entlade weiter

150"

„Sollwert-Vorgabe"

- Lies zurück, ohne den
  Spiegel hochohmig
  zu schalten
- (=> Sollwert gelesen)

150'

- Unterbreche Boost-
  Vorgabe
- Warte Abschalt-
  Verzögerung ab
- Lies zurück
- Schalte Boost-
  Vorgabe wieder auf

Kurzschluss oder
Fehler detektiert? — 160

ja → Programm-Abbruch

nein

Wie groß ist der
aktuelle Istwert? — 170

größer als Soll

180"

- Entladen!
- Rückleseart ist
  „Entladen"

im Toleranzband um Soll

- Mit Sollwert ansteuern!
- Rückleseart ist „Sollwert-
  Vorgabe" — 180'

kleiner als (Soll-Schwelle)

- Boost-Ausgabe!
- Rückleseart ist
  „Boost-Vorgabe" — 180

# FIG 5